# EUROPEAN PATENT APPLICATION

(11) **EP 3 904 246 A1**
(43) Date of publication of application: **03.11.2021**
(21) Application number: 20305406.9
(22) Date of filing: 27.04.2020
(51) Int. Cl.: B65G 47/91, B25J 15/06

(54) **SYSTEM AND METHOD FOR PICKING UP LAYERS OF OBJECTS**

(71) Applicant: Flexlink AB, 415 50 Göteborg (SE)
(72) Inventor: FUSY, Bastien, 38460 SICCIEU (FR)
(74) Representative: Lavoix

(57) **Abstract**

A pick-up head adapted to pick up a layer comprising at least two rows of objects from a container, where the pick-up head is provided with pick-up means comprising a plurality of vacuum cups arranged in rows, where the pick-up means are adapted to move from a pick-up position in which the rows are separated by a first distance, to a release position in which the rows are separated by a second distance, where the second distance is greater than the first distance. The advantage of the invention is that a layer of objects can be picked up and moved even if they are not aligned properly.

## Description

### TECHNICAL FIELD

The present invention relates to a method and a system for picking up and moving a layer of objects, such as lids, from a container to a receiving position, where the objects are somewhat misaligned before the objects are picked up.

### BACKGROUND ART

Robots are often used for loading and unloading operations in the industry. Various types of products and objects can be handled by a robot. The products may be regular or irregular, and the size of an object may vary considerably. The robots can assemble products or they can be used to move the products. One common use for a robot is to move objects from a delivery container of some kind comprising a plurality of products to a magazine or an infeed position at e.g. a conveyor or a production station, where the objects are used one by one for a final manufactured product.

The objects that are moved from the container may have different shapes and sizes, and may be arranged randomly or arranged in more or less well-defined rows and columns. Some objects are easy to pick up from the container by a gripping head comprising vacuum cups, such as flat objects. Some objects may be gripped by arms of a gripping head, such as rigid objects. Some objects, such as irregular and/or fragile objects, are normally handled manually in order to prevent damage of the objects.

Often, a container contains several rows and columns with objects that are stacked on each other in piles. The number of rows and columns correspond to the size of the container, but normally, the container is somewhat larger than required, such that the objects are not positioned in exactly defined positions. This leads to that the rows and/or columns may be somewhat misaligned with respect to the ideal position of each object. The misalignment may make it difficult to pick up the objects, since the pick-up head may be positioned outside of the pick-up zone of an object, e.g. at an edge potion of the object, and/or the objects may be difficult to place in a magazine at the receiving position due to the misalignment. In some examples, the objects are only picked up by one row at the time, or the objects are first aligned in the container by the use of e.g. divider plates or sheets. It is also known to use an intermediate station in which the objects are aligned before the objects are placed in e.g. a magazine.

These methods may work well in some cases, but there is room for an improved pick-up device for handling layers of flat objects.

### DISCLOSURE OF INVENTION

An object of the invention is therefore to provide a pick-up head adapted to pick up a layer of objects. Another object of the invention is to provide a system for picking up a layer of objects. A further object of the invention is to provide a method for moving a layer of objects from a container to a receiving position.

The solution to the problem according to the invention is described in the characterizing part of claim 1 with regard to the pick-up head, in claim 10 regarding the system, and in claim 12 regarding the method. The other claims contain advantageous embodiments and further developments of the pick-up head and method.

In a pick-up head adapted to pick up a layer comprising at least two rows of objects from a container, where the pick-up head is provided with a pick-up means comprising a plurality of vacuum cups arranged in rows, the object of the invention is achieved in that the pick-up means are adapted to move from a pick-up position in which the rows are separated by a first distance, to a release position in which the rows are separated by a second distance, where the second distance is greater than the first distance.

By this first embodiment of the pick-up head according to the invention, a pick-up head that can pick up a layer of objects, such as lids, from a container and move them to a receiving position is provided. Since the rows of objects are displaced from each other before the rows of objects are placed in respective receiving positions, the pick-up head can pick up a layer of misaligned objects from a container and forward them to a receiving position without the need of an intermediate alignment station. Each row of objects is placed in a separate chute. It is therefore only necessary to separate the rows of objects before the objects are placed in the chutes in order to compensate for the sideway misalignment of the objects in each row in the container, the lengthwise misalignment in each row does not matter.

The pick-up means of the pick-up head are positioned on bars, where each bar corresponds to a row of objects. Each bar comprise one vacuum cup for each object in a row. The pick-up head thus comprises a matrix of vacuum cups, corresponding to the number of objects in the layer that is to be picked up. Each vacuum cup is positioned at the centre of each pick-up region of the container. When the pick-up head picks up the objects, each vacuum cup will hold an object somewhere at a gripping zone of the object, such that each object will be held firmly and securely by a vacuum cup. The size of the vacuum cup is selected in dependency of the size of the gripping zone of an object and on the maximal misalignment that an object may have in the container. A larger vacuum cup may provide a larger holding force, but may reach outside of the gripping zone, which may lead to an unreliable grip of the object.

When a layer of object has been gripped by the pick-up head, the layer is raised from the container and the rows of objects are separated from each other by moving the outer bars of the pick-up head away from each other.

The sideways movement distance is at least such that the objects does not overlap between the rows, and is a predefined distance that corresponds to the distance between the infeed regions of the chutes in which the objects are to be placed. With the bars separated sufficiently from each other, the objects can be placed in the chutes without the risk of being damaged by hitting a sidewall of a chute, or the risk of being knocked off a vacuum cup.

In the shown example, a matrix comprising three rows and four columns of objects is used. Other numbers of both rows and columns may be used, where the number of columns is not important for the invention. In one example, a layer may comprise only one column. Where only two rows of objects are picked up, one row is moved away from the other row with a predefined distance. When three rows are picked up, the outer rows are moved away from the centre row by the same predefined distance. When four rows are picked up, the two inner rows are moved away from each other by a predefined distance, and the two outer rows are moved with twice that distance. Regardless of the number of rows that are picked up, the distance between each row will be the same after the rows have been separated from each other.

The objects that are picked up is in one example lids that are to be placed on containers after a product has been filled into the container. This may be e.g. a food product, such as coffee powder, spices or other dry products, but may also be a paste or a liquid. Other products may also be filled in the container before the lid is applied. An object may be relatively flat or may be shaped as a bowl or cup. In any way, the objects are stacked on each other in piles. The shape of an object is in the shown example circular, but an object may have other shapes, such as quadratic, rectangular, oval or hexagonal. It is however important that the objects are arranged in rows in the container that correspond to the orientation of the chutes in which the objects are to be placed.

In a method for moving a layer of objects arranged in rows from a container to a receiving position, the steps of positioning a pick-up head in a predefined position above the objects, picking up the objects with vacuum cups of the pick-up head, lifting the objects, moving the rows of objects away from each other by a predefined distance, placing the rows of objects in chutes arranged at the receiving position, and releasing the objects from the pick-up head are disclosed.

By this first embodiment of the method according to the invention, a layer of objects can be picked up and moved in an easy and reliable manner, even if the objects are somewhat misaligned.

### BRIEF DESCRIPTION OF DRAWINGS

The invention will be described in greater detail in the following, with reference to the embodiments that are shown in the attached drawings, in which
- Fig. 1: shows a schematic view of a system according to the invention in an initial state,
- Fig. 2: shows a schematic view of a system according to the invention in a pick-up state,
- Fig. 3: shows the pick-up head according to the invention in a pick-up position,
- Fig. 4: show the pick-up head according to the invention in a release position,
- Fig. 5: shows a schematic view of a system according to the invention in a moving state,
- Fig. 6: shows a schematic view of a system according to the invention in a release state,
- Fig. 7: shows a schematic view of a system according to the invention with the pick-up head in a pick-up position,
- Fig. 8: shows a schematic view of a container holding a plurality of objects, and
- Fig. 9: shows a flow chart of an example of a method according to the invention.

### MODES FOR CARRYING OUT THE INVENTION

The embodiments of the invention with further developments described in the following are to be regarded only as examples and are in no way to limit the scope of the protection provided by the patent claims. Reference to directions such as vertical, horizontal etc. are related to normal earth plane directions, i.e. the floor of a production plant is horizontal.

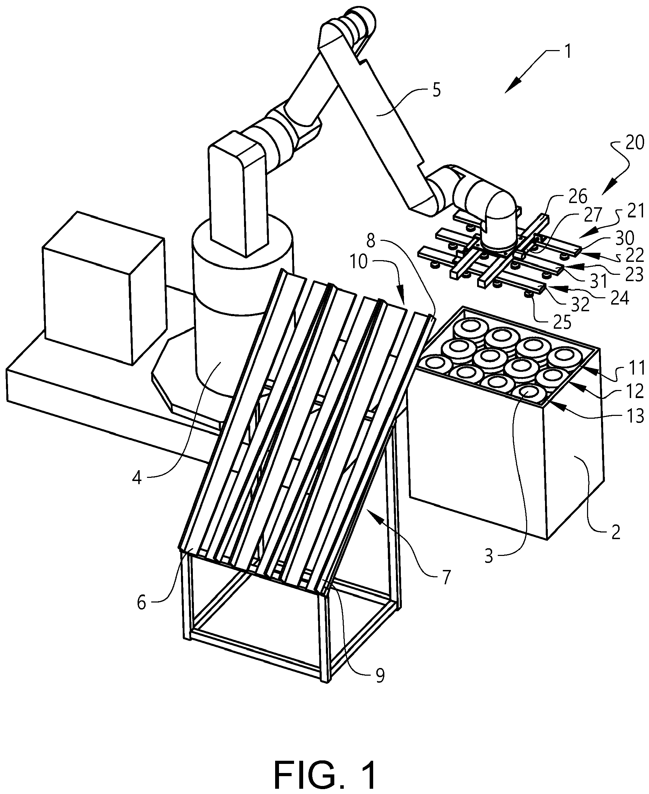

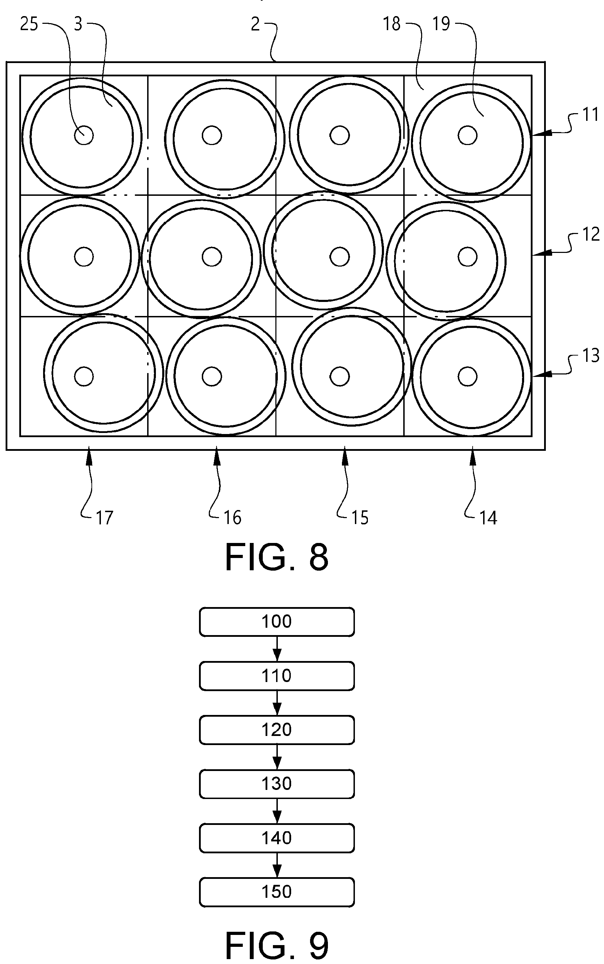

Figs. 1 to 7 show a system according to the invention, Fig. 8 shows a container holding a plurality of objects, and Fig. 9 shows the method steps according to the invention. The system 1 comprises a robot 4 provided with a pick-up head 20. The robot may be a standard industrial robot having a robot arm 5 that can be moved in any direction, and is in the described example a collaborate robot that does not require a protection cage. The arm is provided with a pick-up head 20 that is adapted to pick up and move a layer of objects by using a pick-up means 21 comprising a plurality of vacuum cups 25. The pick-up head may be provided with safety sensors that will detect if the pick-up head comes close to or hits something and will in this case stop the robot. The robot may be arranged at an infeed region of a conveyor having a receiving position 7, where the robot can deliver the objects. In Fig. 1, the system is shown in an initial state, with the pick-up head 20 in a pick-up position 28, where the pick-up head is positioned just above the container 2 with objects 3 that are to be picked up.

In the shown example, the pick-up head 20 is adapted to pick up a layer of objects 3 arranged in a container, where the objects are stacked on each other to form a pile, and where a plurality of piles are arranged in a matrix comprising a number of rows and a number of columns. In the shown example, a matrix comprising three rows 11, 12, 13 and four columns 14, 15, 16, 17 of objects is used. Other numbers of both rows and columns may be used, where the number of columns is not important for the invention.

The objects are in one example lids that are to be placed on containers after a product has been filled into the container. This product may be e.g. a food product, such as coffee powder, spices or other dry products, but may also be a paste or a liquid. Other products may also be filled in a container before the lid is applied. An object may be relatively flat or may be shaped as a bowl or cup. Regardless of the size and shape, the objects are stacked on each other in piles. The shape of the object is in the shown example circular, but an object may have other shapes, such as quadratic, rectangular, oval or hexagonal. It is however important that the objects are arranged in rows in the container that correspond to the orientation of the chutes in which the objects are to be placed.

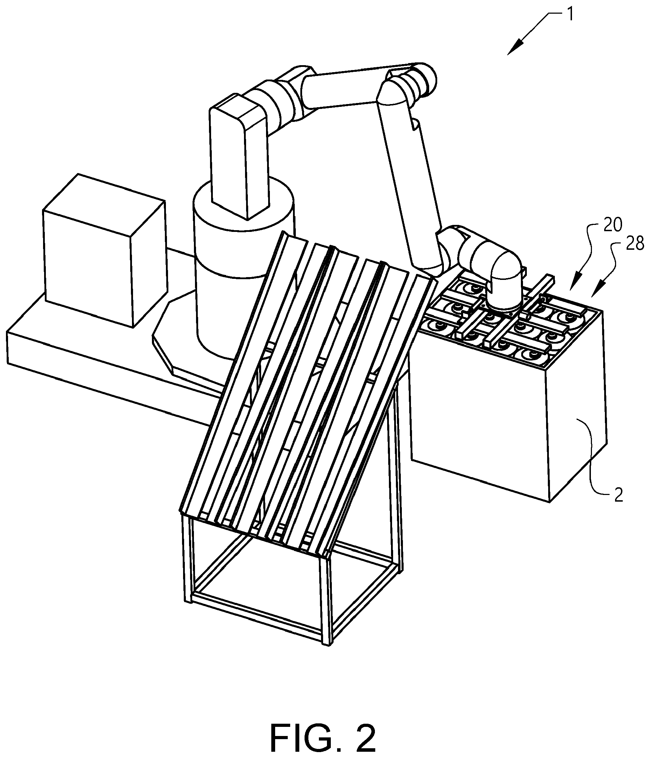

When the pick-up head is positioned above the container, it is lowered to a pick-up state where the pick-up means 21, i.e. the vacuum cups 25, bears on the objects 3, as shown in Fig. 2. The pick-up head comprises one vacuum cup for each object. The vacuum cups 25 of the pick-up head 20 are positioned on bars, where each bar corresponds to a row of objects. In the shown example, a first bar 30 holds a first row 22 of vacuum cups, a second bar 31 holds a second row 23 of vacuum cups, and a third bar 32 holds a third row 24 of vacuum cups. Each bar comprise one vacuum cup for each object in a row. The pick-up head 20 thus comprises a matrix of vacuum cups, corresponding to the number of objects in a layer that is to be picked up.

Each vacuum cup is positioned at the centre of a pick-up region of the container. The container can be seen as being divided in a number of equally large pick-up regions, where one object is assigned to one pick-up region. Ideally, each object should be centred in its pick-up region. Often, objects are centred in the pick-up regions by divider walls or the like, such that each object has a predefined position when it is picked up. This simplifies the pick-up of objects and also simplifies the placement of objects in e.g. chutes or magazines, since each object has a predefined position, and the pick-up head will hold each object in a predefined, aligned position.

The inventive pick-up head is adapted to pick up objects that are not centred in the pick-up regions. Each vacuum cup is centred above each pick-up region, but the objects are somewhat misaligned, and may extend into an adjacent pick-up region. Each vacuum cup will be able to grip an object somewhere on the upper side of the object, but not on a predefined position. With the inventive pick-up head, it is not necessary to position the objects centred in each pick-up region, such that dividing walls or the like are not necessary. This simplifies the packing and transport of the objects, and saves cost and material.

Fig. 8 shows an example of a layer of objects 3 arranged in a container 2. The container comprises a plurality of equally sized pick-up regions 18, one for each object. The vacuum cups 25 will be positioned above an object at the centre of each pick-up region, and will grip each object somewhere at the gripping zone 19 of each object. The gripping zone may comprise the complete object, or may be limited by e.g. a rim at the peripheral of the object. The diameter of the vacuum cup is selected such that it is ensured that a vacuum cup will always grip the object somewhere in the gripping zone. The size of the vacuum cup is also dependent on the maximal misalignment that an object may have in each pick-up region. A larger vacuum cup may provide a larger holding force, but may reach outside of the gripping zone, which may lead to an unreliable grip of the object.

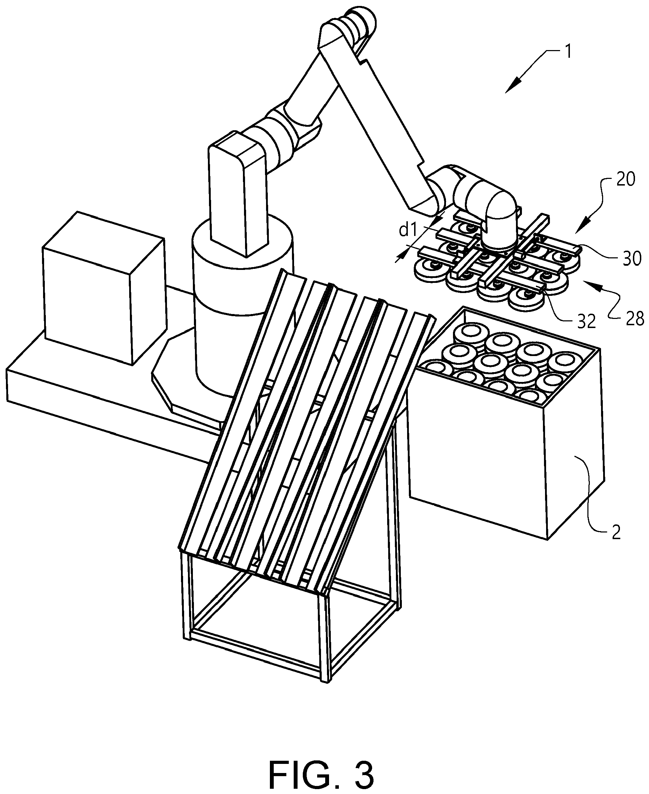

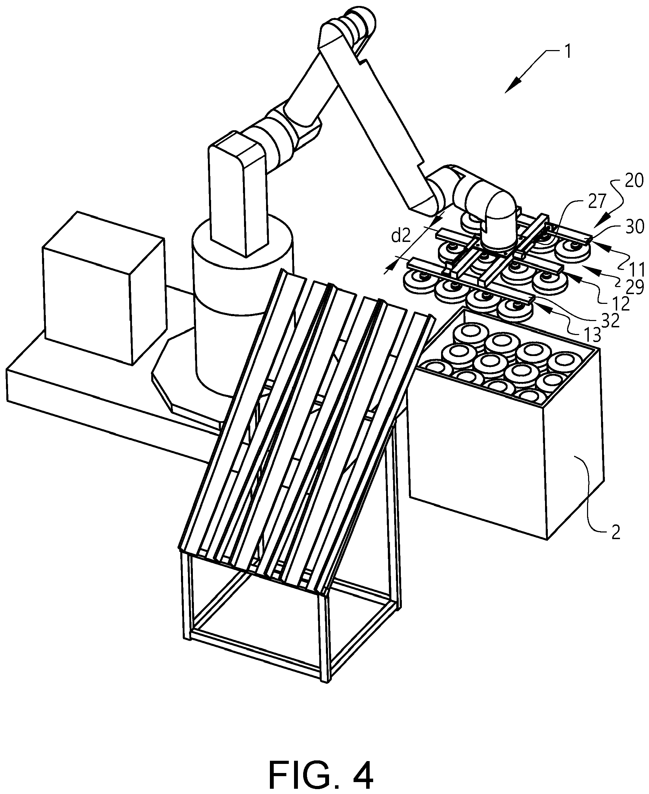

When the pick-up means of the pick-up head bears on the objects, an underpressure is applied to the vacuum cups, such that each vacuum cup grips and holds an object. When all objects are held firmly, the pick-up head lifts the layer of objects from the container, as shown in Fig. 3. When the objects are free from the container, the pick-up head will displace the rows of objects from each other such that the distance between the rows of objects is enlarged, as shown in Fig. 4. In the pick-up position 28, the bars 30, 31, 32 are separated by a first distance di, and in the release position 29, the bars 30, 31, 32 are separated by a second distance d₂, where the second distance d₂ is greater than the first distance di.

The pick-up head is now in a release position 29, where the distance between the rows of objects corresponds to the spacing of the chutes 6 at the receiving position 7. In the shown example, the first bar 30 and the third bar 32 are displaced sideways by the actuator 27. The actuator may e.g. be an air cylinder or an electromagnetic actuator. The distance that the rows of objects is displaced will ensure that the objects in each row does not overlap, such that each row can be placed in a chute without touching any of the sidewalls of the chute. This allows the objects to be securely inserted in the chutes without falling off.

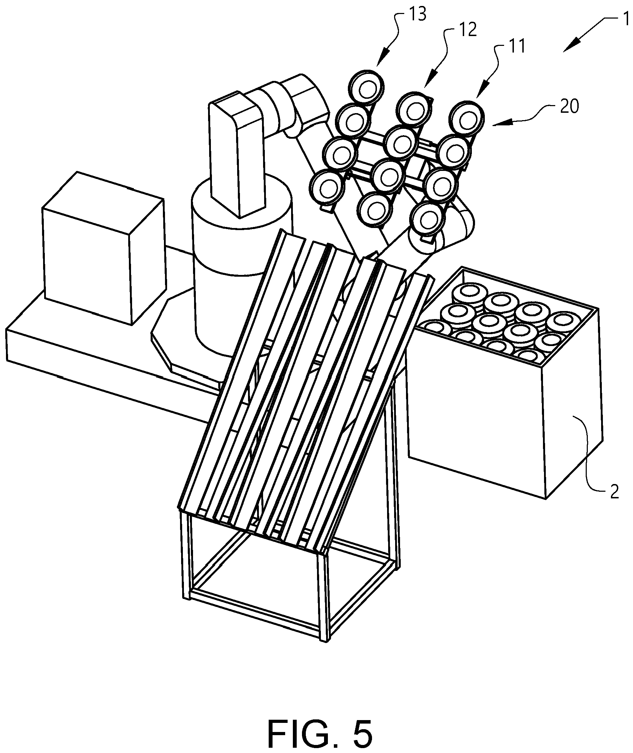

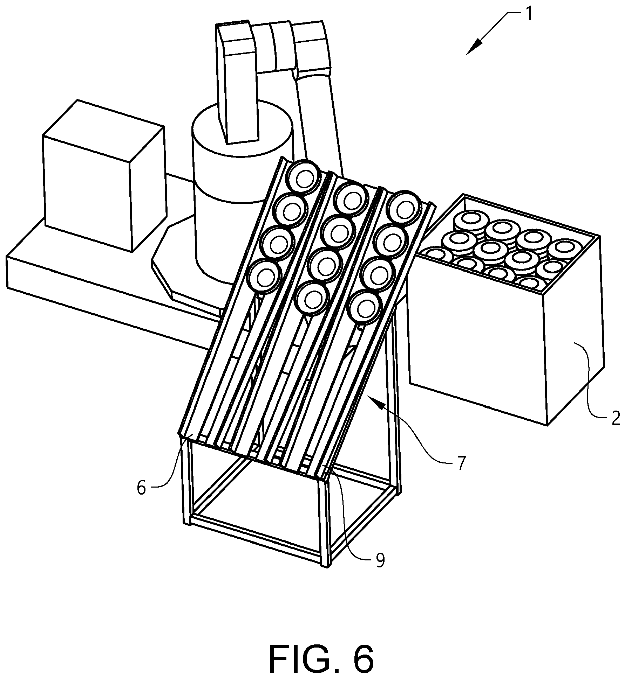

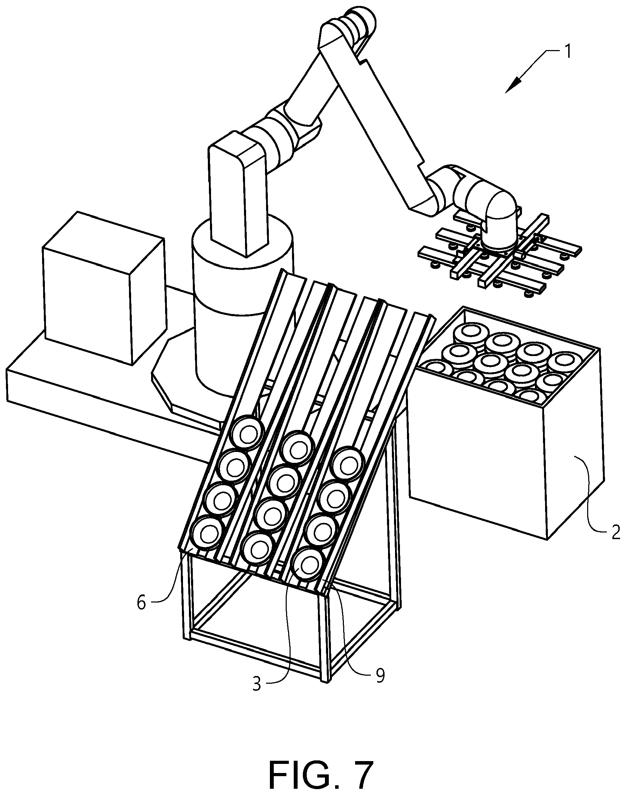

With the pick-up head in the release position, the objects are inserted in the chutes 6 at the infeed region 8 of each chute, as shown in Figs. 5 and 6. Each chute is provided with a slit 10 adapted to allow the vacuum cups 25 to move down the chute and to leave the chute when the objects are released. The width of the infeed region is larger than the diameter or width of the object that is to be placed in the chute. In the shown example, the width of the infeed region is 1.5 times the diameter of the object. The lower end 9 of the chute corresponds to the size of the object, and may e.g. be 1.1 times the diameter of the object. When all objects are inserted in the chutes, the underpressure of the vacuum cups is released, and the objects are released from the pick-up head and slides down the chutes to the lower end, where they are aligned in straight lines, as shown in Fig. 7.

In the method for moving a layer of objects from a container to a receiving position, the following steps are comprised.

In a first step 100, the pick-up head is positioned in a predefined position above the objects. The position of the pick-up head is preferably a predefined position, based on a predefined position of the container holding the objects, but could also be determined by the use of optical detection means, e.g. a vision system having a camera.

In a second step 110, the objects are gripped with vacuum cups of the pick-up head.

In step 120, the objects are lifted from the container.

In step 130, the rows of objects are moved away from each other by a predefined distance, by moving the bars with the vacuum cups away from each other by the use of an actuator.

In step 140, the rows of objects are placed in chutes arranged at the receiving position. The receiving position may comprise a magazine or may be arranged at the infeed region of a conveyor.

In step 150, the objects are released from the pick-up head.

The invention is not to be regarded as being limited to the embodiments described above, a number of additional variants and modifications being possible within the scope of the subsequent patent claims.

### REFERENCE SIGNS

- 1:: System
- 2:: Container
- 3:: Object
- 4:: Robot
- 5:: Robot arm
- 6:: Chute
- 7:: Receiving position
- 8:: Infeed region
- 9:: Lower end
- 10:: Slit
- 11:: First row of objects
- 12:: Second row of objects
- 13:: Third row of objects
- 14:: First column of objects
- 15:: Second column of objects
- 16:: Third column of objects
- 17:: Fourth column of objects
- 18:: Pick-up region
- 19:: Gripping zone
- 20:: Pick-up head
- 21:: Pick-up means
- 22:: First row of vacuum cups
- 23:: Second row of vacuum cups
- 24:: Third row of vacuum cups
- 25:: Vacuum cup
- 26:: Frame
- 27:: Lateral actuator
- 28:: Pick-up position
- 29:: Release position
- 30:: First bar
- 31:: Second bar
- 32:: Third bar

## Claims

1. Pick-up head adapted to pick up a layer comprising at least two rows (11; 12; 13) of objects (3) from a container (2), where the pick-up head (20) is provided with a pick-up means (21) comprising a plurality of vacuum cups (25) arranged in rows (22; 23; 24), **characterized in that** the pick-up means (21) are adapted to move from a pick-up position (28) in which the rows (22; 23; 24) are separated by a first distance (di), to a release position (29) in which the rows (22; 23; 24) are separated by a second distance (d₂), where the second distance (d₂) is greater than the first distance (d₁).

2. Pick-up head according to claim 1, wherein the pick-up means (21) are arranged on bars (30; 31; 32), where at least one bar (30; 31; 32) is operated by an actuator (27).

3. Pick-up head according to claim 1 or 2, wherein a first row (22) of vacuum cups (25) are arranged on a first bar (30), and a second row (23) of vacuum cups (25) are arranged on a second bar (31).

4. Pick-up head according to any one of claims 1 to 3, wherein the pick-up head (20) comprises three rows (22, 23, 24) of vacuum cups (25) arranged on three bars (30, 31, 32).

5. Pick-up head according to claim 4, wherein the first bar (30) and the third bar (32) are operated by an actuator (27).

6. Pick-up head according to any one of the preceding claims, wherein the diameter of the vacuum cups (25) is at least four times smaller than the diameter or width of the object (3) that is to be gripped.

7. Pick-up head according to any one of claims 1 to 6, wherein the objects are circular objects.

8. Pick-up head according to any one of claims 1 to 6, wherein the objects are rectangular objects.

9. Pick-up head according to any one of claims 1 to 8, wherein the first distance (d₁) corresponds to the diameter or width of an object (3).

10. A system (1) for moving a layer of objects (3) from a container (2) to a receiving position (7), wherein the system comprises an industrial robot (4) provided with a pick-up head (20) according to any of the preceding claims.

11. System according to claim 10, wherein the system further comprises a plurality of chutes (6) arranged at the receiving position (7), where the width of the infeed region (8) of a chute (6) is wider than the width of the lower end (9) of a chute (6).

12. A method for moving a layer of objects arranged in rows from a container to a receiving position, said method comprising the steps of:
- positioning a pick-up head in a predefined position above the objects,
- gripping the objects with vacuum cups of the pick-up head,
- lifting the objects,
- moving the rows of objects away from each other by a predefined distance,
- placing the rows of objects in chutes arranged at the receiving position, and
- releasing the objects from the pick-up head.
